# EUROPÄISCHE PATENTSCHRIFT

(11) **EP 2 156 602 B1**
(45) Veröffentlichungstag und Bekanntmachung des Hinweises auf die Patenterteilung: **27.01.2016**
(21) Anmeldenummer: 08750237.3
(22) Anmeldetag: 09.05.2008
(51) Int. Cl.: G06F 21/45, G06Q 10/08, H04L 9/32

(54) **VERFAHREN UND SYSTEM ZUR PRÜFUNG DER ECHTHEIT EINES PRODUKTS UND LESEGERÄT**
METHOD AND SYSTEM FOR VERIFYING THE AUTHENTICITY OF A PRODUCT, AND READING DEVICE
PROCÉDÉ ET SYSTÈME DE CONTRÔLE DE L'AUTHENTICITÉ D'UN PRODUIT ET APPAREIL DE LECTURE

(30) Priorität: 06.06.2007 DE 102007026836
(43) Veröffentlichungstag der Anmeldung: 24.02.2010
(73) Patentinhaber: Bundesdruckerei GmbH, 10958 Berlin (DE)
(72) Erfinder: BYSZIO, Frank, 16348 Wandlitz (DE); WIRTH, Klaus-Dieter, 12683 Berlin (DE)
(74) Vertreter: Richardt Patentanwälte PartG mbB
(86) Internationale Anmeldenummer: PCT/EP2008/055764
(87) Internationale Veröffentlichungsnummer: WO 2008/148623

(56) Entgegenhaltungen:
- WO-A1-2008/101899
- US-A1- 2005 234 823
- US-A1- 2006 235 805
- US-B1- 6 226 619
- KINNEGING T A F: 'Machine Readable Travel Documents, Technical Report, PKI for Machine Readable Travel Documents offering ICC Read-Only Access', [Online] Seite 57PP, XP002396748 INTERNET CITATION Gefunden im Internet: <URL:http://www.icao.int/mrtd/download/docu ments/TR-PKI%20mrtds%20ICC%20re ad-only%20access%20v1_1.pdf#search=%22PKI%2 0FOR%20MACHINE%20READABLE% 20TRAVEL%20DOCUMENTS%20OFFERING%20ICC%20REA D-ONLY%20ACCESS%22> [gefunden am 2006-08-29]

## Beschreibung

Die Erfindung betrifft ein Verfahren zur Prüfung der Echtheit eines Produkts, insbesondere zum Schutz gegen Produktpiraterie, sowie ein entsprechendes System und ein Lesegerät.

Aus dem Stand der Technik sind verschiedene Sicherheitslösungen zum Schutz von Markenprodukten bekannt. Beispielsweise werden Markenprodukte mit einem Hologramm versehen, das sichtbare und verborgene Sicherheitselemente beinhalten kann. Ferner sind auch elektromagnetische, radiofrequente und akustomagnetische Etiketten zur Kennzeichnung von Markenprodukten bekannt. Dazu gehören aktive und passive RFID-Etiketten für verschiedene Trägerfrequenzen.

Die WO2008/101899 A1 zeigt ein Dokument und ein Verfahren zur Zugriffskontrolle, Durch die Zugriffskontrolle soll ein unbemerktes oder unbefugtes Auslesen von Daten verhindert werden. Einen solchen Schutzmechanismus zeigt auch Dokument D4 KINNEGING T A F: "Machine Readable Travel Documents, Technical Report, PKI for Maschine Readable Travel Documents offering ICC Read-Only Access", INTERNET CITATION, (Online), XP002396748, Version 1.1, 01. Oktober 2004.

Aus der US 6,226,619 B1, von der die vorliegende Erfindung als nächstkommendem Stand der Technik ausgeht, ist ein Verfahren zum Schutz gegen Produktpiraterie bekanntgeworden, wonach das Produkt oder dessen Verpackung mit einem Etikett versehen wird, das eine Seriennummer des Produkts trägt. Diese Seriennummer ist auch in einem an dem Produkt befestigten RFID-Tag gespeichert. Die Seriennummer kann mit Hilfe eines Lesegeräts aus dem RFID-Tag ausgelesen und mit der auf dem Etikett gezeigten Seriennummer verglichen werden. Wenn beide Seriennummern übereinstimmen, gilt das Produkt als authentisch.

Ein besonderer Nachteil ist hierbei, dass diese Lösung unter dem Gesichtspunkt des Datenschutzes und dem Schutz des Verbrauchers gegen unerwünschte Ausspähungen unzureichend ist, da das RFID-Tag vom Verbraucher unbemerkt ausgelesen werden kann, Auf dieser Basis könnten dann zum Beispiel für Marketing-Zwecke oder Überwachungszwecke Bewegungsprofile des Verbrauchers erstellt werden.

Der vorliegenden Erfindung liegt demgegenüber die Aufgabe zugrunde, ein verbessertes Verfahren zur Prüfung der Echtheit eines Produkts sowie ein entsprechendes System und ein Lesegerät zu schaffen. Die der Erfindung zugrundeliegenden Aufgaben werden jeweils mit den Merkmalen der unabhängigen Patentansprüche gelöst. Ausführungsformen der Erfindung sind in den abhängigen Patentansprüchen angegeben. Nach Ausführungsformen der Erfindung wird ein Verfahren zur Prüfung der Echtheit eines Produkts zum Schutz gegen Produktpiraterie mit folgenden Schritten geschaffen: Erfassung eines dem Produkt zugeordneten Identifikators, Eingabe des Identifikators in ein Lesegerät, wobei das Lesegerät eine Schnittstelle zur Kommunikation über Funk mit einer dem Produkt zugeordneten Sende-Empfangseinheit aufweist, und wobei in der Sende-Empfangseinheit ein Referenzwert bezüglich des Identifikators gespeichert ist, Autorisierung des Lesegeräts für einen Zugriff auf die Sende-Empfangseinheit, wobei die Autorisierung mit Hilfe des Identifikators über die Schnittstelle gegenüber der Sende-Empfangseinheit erfolgt, wobei das Produkt bei Übereinstimmung des Identifikators mit dem Referenzwert als echt gilt.

Von besonderem Vorteil ist hier, dass die Überprüfung der Echtheit, das heißt der Authentizität des Produkts, nur nach vorheriger Autorisierung des Lesegeräts erfolgen kann, sodass nicht zum Beispiel vom Besitzer des Produkts unbemerkt Daten von der Sende-Empfangseinheit abgefragt werden können. Dadurch wird der Datenschutz gewährleistet und es kann vermieden werden, dass ein Bewegungsprofil des Besitzers des Produkts erstellt wird.

Nach einer Ausführungsform der Erfindung handelt es sich bei dem Produkt um ein bewegliches Gut, wie zum Beispiel ein Markenprodukt und/oder ein durch andere gewerbliche Schutzrechte geschütztes Produkt, dessen Nachahmung oder Kopie unter gesetzlichen Schutz gestellt ist.

Nach einer Ausführungsform der Erfindung handelt es sich bei dem Produkt um ein Verbrauchsgut für den Endverbraucher (sog. consumer product) oder ein Investitionsgut. Beispielsweise kann es sich bei dem Produkt um ein Kleidungsstück, ein Nahrungsmittel oder dessen Verpackung, ein elektronisches Gerät, wie zum Beispiel einen Computer, ein Maschinenteil, ein Ersatzteil, ein Fahrzeug oder Fahrzeugteil, ein Medikament oder ein hochwertiges Getränk handeln.

Durch Anwendung von Ausführungsformen des erfindungsgemäßen Verfahrens kann sich zum Beispiel ein potentieller Endverbraucher des Produkts von dessen Authentizität vor dem Kauf des Produkts überzeugen. Ferner können sich auch zum Beispiel Zwischenhändler, Handelsketten und dergleichen, die ein solches Produkt gegenüber dem Endverbraucher anbieten möchten, Sicherheit hinsichtlich der Echtheit der von ihnen angebotenen Produkte verschaffen.

Nach einer Ausführungsform der Erfindung ist an dem Produkt oder dessen Verpackung ein Identifizierungsmerkmal angeordnet, beispielsweise in Form eines Etiketts. Die Erfassung des Identifikators kann visuell durch einen Benutzer und/oder optisch mit Hilfe eines Sensors des Lesegeräts erfolgen.

Beispielsweise kann eine Seriennummer des Produkts oder eine andere, das Produkt eindeutig identifizierende Angabe, auf einem an dem Produkt befindlichen Etikett im Klartext aufgedruckt sein. Die Seriennummer kann von einem Benutzer von dem Etikett abgelesen und zum Beispiel manuell über eine Tastatur in das Lesegerät eingegeben werden. Alternativ kann die Erfassung des Identifikators von dem Identifizierungsmerkmal automatisch erfolgen, insbesondere mit Hilfe eines optischen Sensors des Lesegeräts. Dies ist insbesondere dann vorteilhaft, wenn der Identifikator nicht im Klartext für einen Benutzer lesbar auf dem Identifizierungsmerkmal angegeben ist, insbesondere wenn es sich bei dem Identifizierungsmerkmal um einen Barcode, ein Hologramm, einen optischen Speicher oder dergleichen handelt.

Nach einer Ausführungsform der Erfindung sendet das Lesegerät den Identifikator an die Sende-Empfangseinheit. Diese vergleicht den Identifikator mit einem Referenzwert. Bei Übereinstimmung des Identifikators mit dem Referenzwert signalisiert die Sende-Empfangseinheit die Echtheit des Produkts. Im gegenteiligen Fall gibt die Sende-Empfangseinheit kein Signal ab. Ein Zugriff des Lesegeräts auf die Sende-Empfangseinheit ist bei dieser Ausführungsform also nur möglich, wenn das Lesegerät einen zutreffenden Identifikator an die Sende-Empfangseinheit überträgt, wodurch die Autorisierung des Lesegeräts gegeben ist.

Nach einer Ausführungsform der Erfindung sendet das Lesegerät ein Zugriffskommando an die Sende-Empfangseinheit. Das Zugriffskommando ist ganz oder teilweise mit Hilfe des Identifikators oder eines daraus abgeleiteten Schlüssels verschlüsselt, beispielsweise nach einem symmetrischen Verschlüsselungsverfahren. In diesem Fall ist die Autorisierung des Lesegeräts gegenüber der Sende-Empfangseinheit dann gegeben, wenn die Sende-Empfangseinheit das Zugriffskommando mit Hilfe des in der Sende-Empfangseinheit gespeicherten Referenzwerts entschlüsseln kann.

Nach einer solchen Autorisierung des Lesegeräts überträgt die Sende-Empfangseinheit den Referenzwert an das Lesegerät, sodass das Lesegerät den Identifikator anhand des Referenzwerts überprüfen kann. Vorzugsweise wird der Referenzwert vor seiner Übertragung von der Sende-Empfangseinheit an das Lesegerät ebenfalls verschlüsselt, beispielsweise mit demselben symmetrischen Schlüssel, mit dem auch das Zugriffskommando durch das Lesegerät verschlüsselt worden ist.

Nach einer Ausführungsform der Erfindung wird die Vertrauenswürdigkeit der Echtheitsprüfung dadurch weiter gesteigert, dass sich die Sende-Empfangseinheit gegenüber dem Lesegerät oder einer dem Lesegerät zugeordneten Chipkarte mit Hilfe eines kryptographischen Verfahrens authentifizieren muss. Alternativ oder zusätzlich muss sich auch das Lesegerät bzw. die dem Lesegerät zugeordnete Chipkarte gegenüber der Sende-Empfangseinheit authentifizieren. Die Authentifizierung kann jeweils mit Hilfe eines symmetrischen Schlüssels oder eines asymmetrischen Schlüsselpaares, beispielsweise mit einem Challenge-Response-Verfahren, erfolgen.

Nach einer Ausführungsform der Erfindung wird die Vertrauenswürdigkeit der Echtheitsprüfung dadurch gesteigert, dass die Sende-Empfangseinheit zur Übertragung einer Signatur des Referenzwertes an das Lesegerät ausgebildet ist. Beispielsweise wird der Referenzwert mit Hilfe des privaten Schlüssels des Herstellers des Produkts oder einer Handelskette, die das Produkt anbietet, digital signiert. Die Signatur des Referenzwerts wird durch das Lesegerät mit Hilfe des entsprechenden öffentlichen Schlüssels überprüft. Dieser öffentliche Schlüssel kann in dem Lesegerät abgespeichert sein. Das Lesegerät kann auch über eine Schnittstelle, wie zum Beispiel eine Netzwerk-Schnittstelle, insbesondere eine Internet-Schnittstelle, verfügen, um den benötigten öffentlichen Schlüssel von einem Verzeichnisserver abzufragen.

Nach einer Ausführungsform der Erfindung können nach der Autorisierung und gegebenenfalls der Authentisierung und/oder Überprüfung der Signatur produktbezogene Daten aus der Sende-Empfangseinheit durch das Lesegerät ausgelesen werden. Bei diesen produktbezogenen Daten kann es sich um Angaben hinsichtlich der Verwendbarkeit, der Handhabung, der Wartung oder dergleichen handeln. Insbesondere können die produktbezogenen Daten ein Haltbarkeitsdatum beinhalten.

Nach einer Ausführungsform der Erfindung beinhalten die produktbezogenen Daten produktrelevante Umweltdaten, wie zum Beispiel Temperaturdaten. Für die Verwendbarkeit eines Medikaments beispielsweise, kann neben dessen Haltbarkeitsdatum auch relevant sein, ob das Medikament nach seiner Produktion während des Transports und der Lagerung in einem spezifizierten Temperaturbereich aufbewahrt worden ist. Beispielsweise ist es für verschiedene Medikamente erforderlich, dass diese ständig gekühlt werden. Um die Verwendbarkeit, zum Beispiel eines Medikaments zu überprüfen, werden solche produktrelevante Umweltdaten von dem Lesegerät aus dem Speicher ausgelesen.

In einem weiteren Aspekt betrifft die Erfindung ein System zur Prüfung der Echtheit eines Produkts mit einem dem Produkt zugeordneten oder durch Personalisierung zuordnungsbaren Identifizierungsmerkmal von dem ein Identifikator optisch erfassbar ist, einer Sende-Empfangseinheit, die zur Kommunikation über Funk mit einem Lesegerät ausgebildet ist, wobei in der Sende-Empfangseinheit ein Referenzwert bezüglich des Identifikators gespeichert ist oder speicherbar ist, und wobei die Sende-Empfangseinheit Mittel zur Autorisierung des Lesegeräts für einen Zugriff auf die Sende-Empfangseinheit aufweist, sodass die Prüfung der Echtheit des Produkts anhand des Identifikators und des Referenzwerts nur nach der Autorisierung erfolgen kann.

Das System kann also mit einem noch nicht personalisiertem Identifizierungsmerkmal und/oder einer noch nicht personalisierten Sende-Empfangseinheit z.B. an den Hersteller des Produkts geliefert werden, wobei die Anbringung des Systems an dem Produkt und die produktspezifische Personalisierung - beispielsweise durch Zuordnung einer Seriennummer - durch den Hersteller des Produkts erfolgt. Die Personalisierung kann aber auch Seitens des Herstellers des erfindungsgemäßen Systems erfolgen, wenn diesem die Personalisierungsinformation, wie z.B. die Seriennummern, von dem Hersteller des Produkts zur Verfügung gestellt wird.

Gemäß einer Ausführungsform der Erfindung handelt es sich bei der Sende-Empfangseinheit um einen Transponder, insbesondere einen RFID-Transponder. Ein RFID-Transponder wird auch als RFID-Etikett, RFID-Chip, RFID-Tag, RFID-Label oder Funketikett bezeichnet. Der RFID-Transponder hat eine Funkschnittstelle, über die in dem RFID-Transponder gespeicherte Daten über Radiowellen verfügbar gemacht werden können. Bei niedrigen Frequenzen geschieht dies induktiv über ein Nahfeld, bei höheren Frequenzen über ein elektromagnetisches Fernfeld. Der RFID-Transponder beinhaltet vorzugsweise einen Mikrochip und eine Antenne, die in einem Träger oder Gehäuse untergebracht oder auf ein Substrat aufgedruckt sind. Der RFID-Transponder kann passiv oder aktiv ausgebildet sein, wobei er im letzteren Fall über eine Energiequelle, wie zum Beispiel eine Batterie, verfügt.

In einem weiteren Aspekt betrifft die Erfindung ein Lesegerät für eine einem Produkt zugeordnete Sende-Empfangseinheit, mit Mitteln zur Eingabe eines Identifikators, der dem Produkt zugeordnet ist, einer Schnittstelle zur Kommunikation über Funk mit der Sende-Empfangseinheit, Mitteln zur Autorisierung für einen Zugriff des Lesegeräts auf die Sende-Empfangseinheit mit Hilfe des Identifikators.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Systems und eines erfindungsgemäßen Lesegeräts,
- Figur 2: eine weitere Ausführungsform eines erfindungsgemäßen Systems und eines erfindungsgemäßen Lesegeräts,
- Figur 3: ein Flussdiagramm einer Ausführungsform eines erfindungsgemäßen Verfahrens,
- Figur 4: ein Blockdiagramm einer weiteren Ausführungsform eines erfindungsgemäßen Systems und eines erfindungsgemäßen Lesegeräts,
- Figur 5: ein Flussdiagramm einer weiteren Ausführungsform eines erfindungsgemäßen Verfahrens.

Elemente der nachfolgenden Figuren, die einander entsprechen, sind mit denselben Bezugszeichen gekennzeichnet.

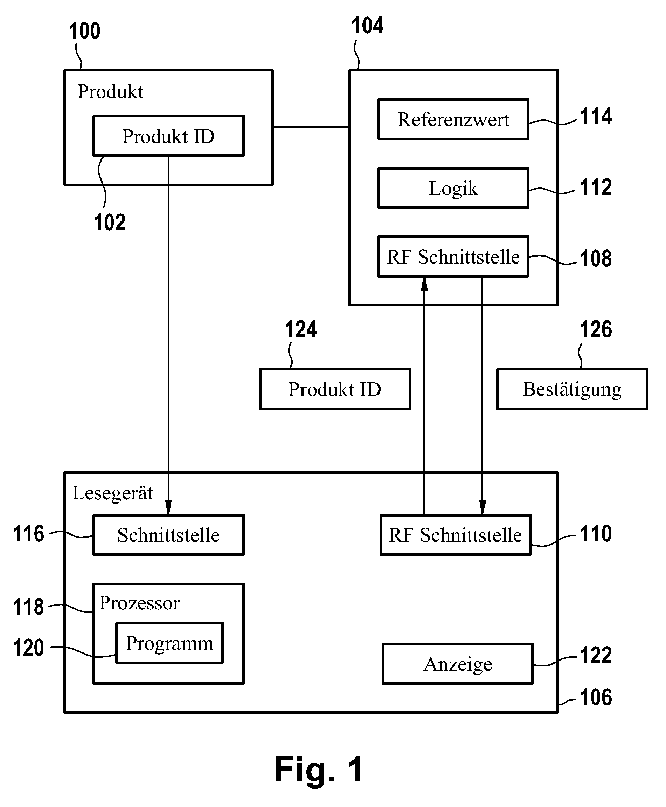

Die Figur 1 zeigt ein Produkt 100. Bei dem Produkt 100 kann es sich um ein bewegliches Gut handeln, wie zum Beispiel ein Gebrauchsgut, insbesondere ein Kleidungsstück, Getränk, ein elektronisches Produkt, oder eine Maschine, einen Apparat, ein Maschinen- oder Apparateteil, ein Ersatzteil, ein Medikament oder dergleichen. Insbesondere kann es sich bei dem Produkt 100 um ein durch ein oder mehrere gewerbliche Schutzrechte geschütztes Produkt handeln, insbesondere ein Markenprodukt, dessen unerlaubte Nachahmung zu einem erheblichen wirtschaftlichen Schaden führen kann und/oder zu einem Sicherheitsrisiko oder einer gesundheitlichen Gefährdung.

Das Produkt 100 soll gegen unerlaubtes Kopieren und Nachahmen, insbesondere gegen sogenannte Produktpiraterie, geschützt werden, indem es mit einem erfindungsgemäßen System zur Prüfung der Echtheit, das heißt der Authentizität des Produkts, versehen wird.

Hierzu ist dem Produkt 100 ein Identifikator zugeordnet. Bei dem Identifikator kann es sich um eine Kennung handeln, mit Hilfe derer das Produkt eindeutig identifiziert werden kann, zum Beispiel eine Seriennummer oder eine Seriennummer in Kombination mit einer Herstellernummer. Insbesondere kann es sich bei dem Identifikator um einen sogenannten Globally Unique Identifier (GUID) handeln.

Der Identifikator kann mit Hilfe eines Identifizierungsmerkmals unmittelbar an dem Produkt 100 oder dessen Verpackung angebracht werden. Beispielsweise befindet sich auf oder an dem Produkt 100 ein Etikett 102, auf dem der Identifikator ("Produkt ID") im Klartext aufgedruckt ist. Das Etikett 102 ist beispielsweise so ausgebildet, dass es nicht zerstörungsfrei von dem Produkt 100 entfernbar ist. Das Etikett 102 kann auch ein Hologramm oder einen optischen Speicher tragen, aus dem die Produkt-ID mit Hilfe eines optischen Sensors maschinell auslesbar ist.

Dem Produkt 100 ist ferner eine Sende-Empfangseinheit, das heißt ein Transponder 104, zugeordnet. Der Transponder 104 ist zur drahtlosen Kommunikation über Funk mit einem Lesegerät 106 ausgebildet. Beispielsweise handelt es sich bei dem Transponder 104 um einen RFID-Transponder, insbesondere einen sogenannten RFID-Tag.

Der Transponder 104 hat eine Funk-Schnittstelle 108 zur Kommunikation mit einer entsprechenden Funk-Schnittstelle 110 des Lesegeräts 106. Der Transponder 104 verfügt ferner über einen Logik-Schaltkreis 112, wie zum Beispiel einen Mikroprozessor zur Ausführung von Programminstruktionen. Ferner hat der Transponder 104 einen elektronischen Speicher zur Speicherung eines Referenzwerts 114 bezüglich des Identifikators.

Das Lesegerät 106 hat eine Schnittstelle 116 zur Eingabe des Identifikators in das Lesegerät 106. Bei der Schnittstelle 116 kann es sich zum Beispiel um eine Tastatur handeln, über die ein Benutzer den zuvor von dem Etikett 102 abgelesenen Identifikator manuell in das Lesegerät 106 eingeben kann. Die Schnittstelle 116 kann auch einen Sensor zur automatischen Erfassung des Identifikators von dem Etikett 102 und zu dessen Eingabe in das Lesegerät 106 aufweisen.

Das Lesegerät 106 verfügt ferner über einen Prozessor 118 zur Ausführung von Programminstruktionen 120 sowie eine Anzeige 122.

Zur Prüfung der Echtheit des Produkts 100 wird wie folgt vorgegangen: Zunächst wird der Identifikator von dem Etikett 102 visuell durch einen Benutzer oder maschinell mit einen Sensor der Schnittstelle 116 erfasst und in das Lesegerät 106 eingegeben. Durch Ausführung der Programminstruktionen 120 wird die Funk-Schnittstelle 110 des Lesegeräts 106 angesprochen, sodass ein Signal 124 von der Funk-Schnittstelle 110 zu der Funk-Schnittstelle 108 des Transponders 104 übertragen wird. Mit dem Signal 124 wird der Identifikator, der zuvor über die Schnittstelle 116 eingegeben worden ist, von dem Lesegerät 106 an den Transponder 104 übertragen.

Der Transponder 104 wertet das von dem Lesegerät 106 empfangene Signal 124 aus, indem mit Hilfe des Logik-Schaltkreises 112 eine Prüfung des mit dem Signal 124 empfangenen Identifikators und des Referenzwerts 114 auf Übereinstimmung erfolgt. Wenn diese Übereinstimmung vorliegt, so gilt das Lesegerät 106 als gegenüber dem Transponder 104 autorisiert. Gleichzeitig folgt aus der Übereinstimmung des Identifikators und des Referenzwerts 114, dass das Produkt 100 echt ist. Die Echtheit des Produkts wird von dem Transponder 104 durch Abgabe eines Signals 126 von dessen Funk-Schnittstelle 108 gegenüber dem Lesegerät 106 signalisiert. Aufgrund des Empfangs des Signals 126 gibt das Lesegerät 106 auf dessen Anzeige 122 eine entsprechende Nachricht für den Benutzer aus, wonach das Produkt authentisch ist.

Wenn hingegen der von dem Transponder 104 mit dem Signal 124 empfangene Identifikator nicht mit dem Referenzwert 114 übereinstimmt, so gilt das Lesegerät 106 als nicht autorisiert, um auf den Transponder 104 zuzugreifen. In diesem Fall gibt der Transponder 104 kein Signal zur Beantwortung des Signals 124 ab.

Von besonderem Vorteil ist hierbei, dass also ein Ansprechen des Transponders 104 nur nach Autorisierung des Lesegeräts 106 möglich ist, wobei die Autorisierung des Lesegeräts 106 voraussetzt, dass der Identifikator z.B. visuell oder optisch von dem Etikett 102 erfasst wird. Da dies nicht unbemerkt von dem Besitzer des Produkts 100 erfolgen kann, wird dadurch vermieden, dass mit Hilfe des Transponders 104 ein Bewegungsprofil des Besitzers des Produkts 100 erstellt wird.

In einer Ausführungsform der Erfindung ist das Etikett 102 so angeordnet, dass es im Benutzungszustand des Produkts 100 nicht ohne Weiteres visuell oder optisch erfassbar ist. Beispielsweise ist das Etikett 102 im Inneren eines Kleidungsstücks befestigt.

Der Transponder 104 ist vorzugsweise mit dem Produkt 100 oder dessen Verpackung mechanisch so verbunden, dass er zerstörungsfrei nicht oder kaum von dem Produkt 100 oder dessen Verpackung entfernbar ist.

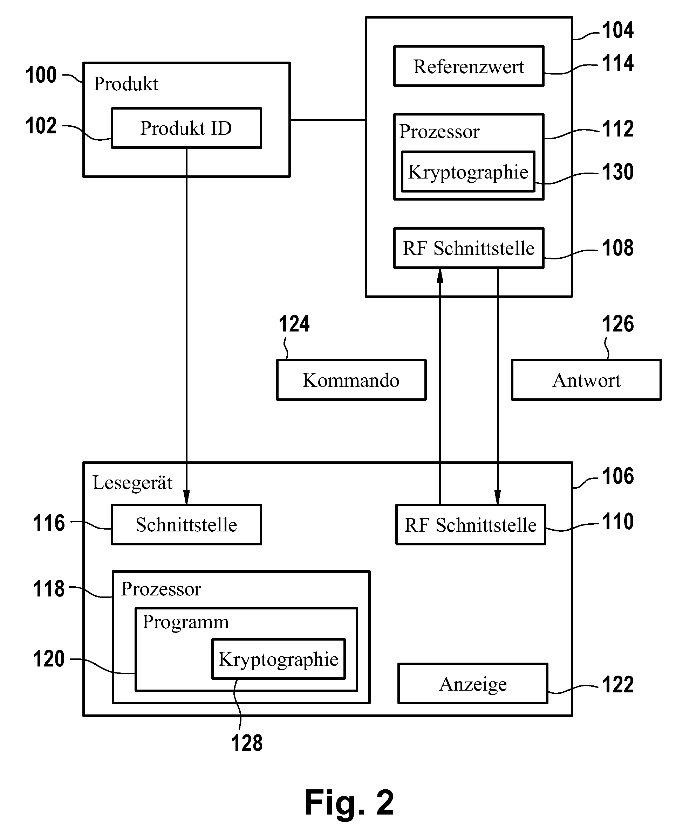

Die Figur 2 zeigt eine weitere Ausführungsform eines erfindungsgemäßen Systems zur Prüfung der Echtheit des Produkts 100. In der Ausführungsform der Figur 2 beinhalten die Programminstruktionen 120 eine kryptographische Komponente 128, beispielsweise für eine Verschlüsselung und Entschlüsselung mit Hilfe eines symmetrischen Schlüssels. Der Logik-Schaltkreis 112 des Transponders 104 ist bei dieser Ausführungsform ebenfalls als Prozessor ausgebildet, der unter anderem zur Ausführung einer entsprechenden kryptographischen Komponente 130 dient.

Zur Prüfung der Echtheit des Produkts 100 wird hier beispielsweise wie folgt vorgegangen: Nach der Erfassung des Identifikators von dem Etikett 102 und dessen Eingabe über die Schnittstelle 116 des Lesegeräts 106 generiert der Prozessor 118 durch Ausführung der Programminstruktionen 120 ein Kommando, welches als Signal 124 zu dem Transponder 104 übertragen wird. Bei dem Kommando 124 handelt es sich um Zugriffskommando auf den Transponder 104, um den Referenzwert 114 aus dem Transponder 104 auszulesen.

Um dem Transponder 104 eine Prüfung der Autorisierung des Lesegeräts zu ermöglichen, ist das Kommando 124 verschlüsselt. Hierzu wird das Kommando durch die kryptographische Komponente 128 mit dem Identifikator oder einem daraus abgeleiteten Schlüssel mit Hilfe eines symmetrischen Verschlüsselungsverfahrens vor der Übertragung an den Transponder 104 verschlüsselt. Mit dem Empfang des Signals 124 durch den Transponder 104 wird die kryptographische Komponente 130 gestartet, um das mit dem Signal 124 empfangene Kommando mit Hilfe des Referenzwerts 114 als symmetrischen Schlüssel zu entschlüsseln. Nur wenn diese Entschlüsselung gelingt, das heißt, wenn der Referenzwert 114 zu dem von dem Etikett 102 erfassten Identifikator passt, gibt der Transponder 104 das Signal 126 ab, mit dem der Referenzwert 114 von dem Transponder 104 zu dem Lesegerät 106 übertragen wird. Vorzugsweise wird der Referenzwert 114 verschlüsselt übertragen, beispielsweise indem der Referenzwert 114 mit dem Identifikator als symmetrischen Schlüssel durch die kryptographische Komponente 130 verschlüsselt wird.

Nach Empfang des Signals 126 und gegebenenfalls Entschlüsselung durch die kryptographische Komponente 128 liegt also der Referenzwert 114 in dem Lesegerät 106 vor, sodass dieser von dem Lesegerät 106 mit dem Identifikator verglichen werden kann. Wenn der Identifikator und der Referenzwert 114 übereinstimmen, gibt das Lesegerät 106 auf seiner Anzeige 122 eine entsprechende Nachricht aus, die die Echtheit des Produkts 100 anzeigt.

Von besonderem Vorteil ist auch hier wiederum, dass ein Zugriff des Lesegeräts 106 auf den Transponder dessen Autorisierung voraussetzt, wobei diese dann gegeben wird, wenn zuvor ein Identifikator von dem Etikett 102 erfasst und in das Lesegerät 106 eingegeben worden ist, der zu dem auf dem Transponder 104 gespeicherten Referenzwert 114 passt, da nur in diesem Fall die Entschlüsselung des mit dem Signal 124 empfangenen Kommandos durch die kryptographische Komponente 130 des Transponders 104 gelingt.

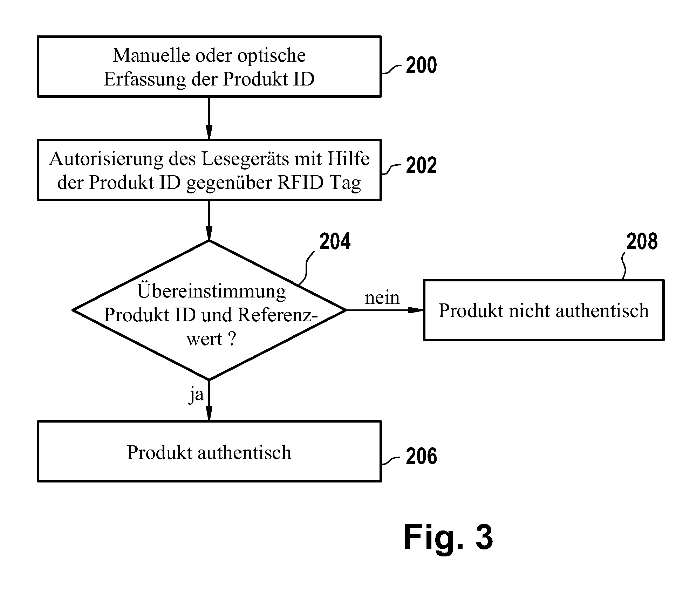

Die Figur 3 zeigt ein entsprechendes Flussdiagramm. In dem Schritt 200 wird der Identifikator, das heißt beispielsweise eine eindeutige Produkt ID, von dem Produkt oder dessen Verpackung visuell durch einen Benutzer oder maschinell optisch erfasst und in das Lesegerät manuell oder automatisch eingegeben.

In dem Schritt 202 autorisiert sich das Lesegerät mit Hilfe des Identifikators gegenüber dem Transponder, der beispielsweise als RFID-Tag ausgebildet ist. Hierzu überträgt das Lesegerät den in dem Schritt 200 erfassten Identifikator im Klartext an den RFID-Tag, sodass der RFID-Tag den Identifikator auf Übereinstimmung mit einem in dem RFID-Tag gespeicherten Referenzwert überprüfen kann. Alternativ sendet das Lesegerät an den RFID-Tag ein verschlüsseltes Zugriffskommando, wobei das Zugriffskommando mit einem symmetrischen Schlüssel verschlüsselt ist, wobei es sich bei dem symmetrischen Schlüssel um den Identifikator oder einen daraus abgeleiteten Schlüssel handelt. Die Prüfung der Autorisierung des Lesegeräts kann dann durch den RFID-Tag durch einen Entschlüsselungsversuch des Zugriffskommandos mit Hilfe des zu dem RFID-Tag gespeicherten Referenzwerts erfolgen.

Die Prüfung des Identifikators und des Referenzwerts auf Übereinstimmung erfolgt in dem Schritt 204, wobei dieser Schritt durch einen unmittelbaren Vergleich des Identifikators mit dem Referenzwert oder durch einen Entschlüsselungsversuch erfolgt, wie oben erläutert. Wenn sich eine Übereinstimmung zwischen dem Identifikator und dem Referenzwert ergibt, so wird in dem Schritt 206 ein Signal von dem RFID-Tag und/oder dem Lesegerät ausgegeben, wonach das Produkt authentisch ist. Im gegenteiligen Fall gibt der RFID-Tag nicht den Referenzwert an das Lesegerät aus oder reagiert auf den Zugriffsversuch des Lesegeräts überhaupt nicht, woraus folgt, dass das Produkt nicht authentisch ist (Schritt 208).

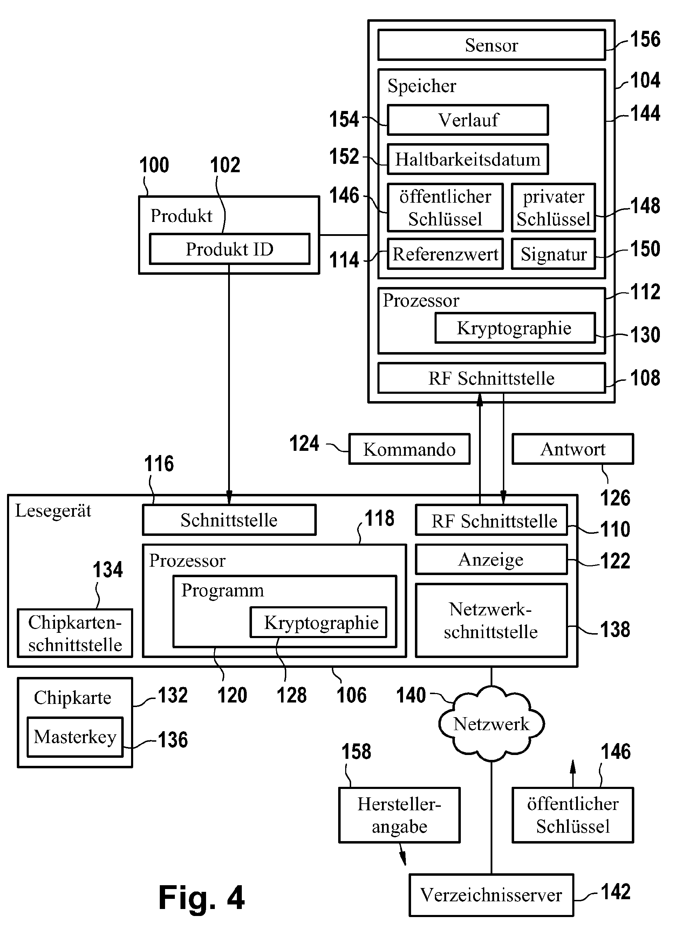

Die Figur 4 zeigt ein Blockdiagramm einer weiteren Ausführungsform eines erfindungsgemäßen Systems und eines erfindungsgemäßen Lesegeräts 106. Bei dieser Ausführungsform ist der Transponder 104 zur Authentifizierung gegenüber dem Lesegerät 106 oder gegenüber einer dem Lesegerät 106 zugeordneten Chipkarte 132 ausgebildet. Die Authentifizierung des Transponders 104 kann mit Hilfe eines symmetrischen oder eines asymmetrischen kryptographischen Verfahrens erfolgen, beispielsweise um über ein Challenge-Response-Verfahren die Authentizität des Transponders 104 nachzuweisen.

In der hier betrachteten Ausführungsform kann das Lesegerät 106 eine Chipkarten-Schnittstelle 134 für die Chipkarte 132 aufweisen, auf der ein Masterkey 136 gespeichert ist. Die Chipkarte 132 ist einem autorisierten Benutzer des Lesegeräts 106 zugeordnet.

Das Lesegerät 106 kann ferner eine Netzwerk-Schnittstelle 138 aufweisen, um über ein Netzwerk 140, wie zum Beispiel dem Internet, mit einem Verzeichnisserver, das heißt einem sogenannten Directory, 142 zu kommunizieren.

Der Transponder 104 hat in der hier betrachteten Ausführungsform zumindest einen elektronischen Speicher 144, in dem der Referenzwert 114 sowie optional weitere Daten gespeichert sind. Hierbei kann es sich um ein asymmetrisches Schlüsselpaar, bestehend aus einem öffentlichen Schlüssel 146 und einem privaten Schlüssel 148 handeln. Dieses Schlüsselpaar kann einem Hersteller des Produkts 100 zugeordnet sein. Zumindest der private Schlüssel 148 ist in einem besonders geschützten Speicherbereich des elektronischen Speichers 144 gespeichert, sodass er prinzipiell nicht ausgelesen werden kann.

Neben dem Referenzwert 114 kann eine elektronische Signatur 150 des Referenzwerts 114 in dem elektronischen Speicher 144 gespeichert sein. Die elektronische Signatur 150 wird durch Verschlüsselung des Referenzwerts oder eines aus dem Referenzwert 114 gewonnenen Hash-Werts mit dem privaten Schlüssel 148 gewonnen.

Ferner können in dem elektronischen Speicher 144 produktbezogene Daten gespeichert sein, wie zum Beispiel ein Haltbarkeitsdatum 152 des Produkts 100. Darüber hinaus können auch produktrelevante Umweltinformationen in dem elektronischen Speicher 144 gespeichert sein, wie zum Beispiel Temperaturwerte 154. Die Temperaturwerte können mit Hilfe eines Temperatursensors 156 des Transponders 104 in regelmäßigen oder unregelmäßigen zeitlichen Abständen während des Transports und/oder der Lagerung des Produkts 100 erfasst und in ihrem zeitlichen Verlauf in dem Speicher 144 abgelegt werden. Dies ist insbesondere dann relevant, wenn es sich bei dem Produkt 100 um ein verderbliches Gut, wie zum Beispiel ein Lebensmittel oder ein Medikament, handelt, welches ständig gekühlt werden muss.

Zur Prüfung der Echtheit des Produkts 100 wird beispielsweise wie folgt vorgegangen: Zunächst wird wie bei den Ausführungsformen der Figuren 1 und 2 ein Identifikator von dem Etikett 102 erfasst und über die Schnittstelle 116 in das Lesegerät 106 eingegeben. Das Lesegerät 106 liest von der Chipkarte 132 über die Chipkarten-Schnittstelle 134 den Masterkey 136 und generiert aus dem Masterkey 136 und dem Identifikator einen symmetrischen Schlüssel. Durch Ausführung der Programminstruktionen 120 wird ein Zugriffskommando 124 generiert und mit Hilfe des symmetrischen Schlüssels durch die kryptographische Komponente 128 verschlüsselt.

Zur Authentifizierung des Transponders 104 mittels eines Challenge-Response-Verfahrens basierend auf dem asymmetrischen Schlüsselpaar 146, 148, kann das Lesegerät 106 ferner eine Zufallszahl generieren und diese mit Hilfe des öffentlichen Schlüssels 146 verschlüsseln. Der öffentliche Schlüssel 146 kann in dem Lesegerät 106 gespeichert sein. Alternativ kann das Lesegerät 106 über seine Netzwerk-Schnittstelle 138 den öffentlichen Schlüssel 146 von dem Verzeichnisserver 142 abfragen, indem es eine Datenbankanfrage 158 mit beispielsweise der Angabe des Herstellers des Produkts 100 an den Verzeichnisserver 142 richtet.

Die mit dem öffentlichen Schlüssel 146 verschlüsselte Zufallszahl wird als Teil des Zugriffskommandos nach der symmetrischen Verschlüsselung des Zugriffkommandos als Signal 124 an den Transponder 104 übertragen. Dort wird mit Hilfe des Referenzwerts 114 und der kryptographischen Komponente 130 die symmetrische Verschlüsselung des Zugriffskommandos rückgängig gemacht. Die mit dem öffentlichen Schlüssel 146 verschlüsselte Zufallszahl des Zugriffskommandos wird mit Hilfe des privaten Schlüssels 148 entschlüsselt.

Der Transponder 104 überträgt dann als Antwort auf das Signal 124 das Signal 126 an das Lesegerät 106, wobei mit dem Signal 126 die entschlüsselte Zufallszahl übertragen wird. Auch das Signal 126 kann verschlüsselt sein, vorzugsweise mit Hilfe desselben symmetrischen Schlüssels, mit dem das Zugriffskommando des Signals 124 verschlüsselt worden ist.

Das Lesegerät 106 vergleicht dann die ursprünglich generierte Zufallszahl mit der von dem Transponder 104 empfangenen Zufallszahl. Stimmen beide Zufallszahlen überein, so gilt der Transponder 104 als authentisch. Ferner gilt dann das Lesegerät 106 auch als für den Zugriff auf den Transponder 104 autorisiert, da sonst die Entschlüsselung mit Hilfe des Referenzwerts 114 durch die kryptographische Komponente 130 fehlgeschlagen wäre, sodass das Signal 126 nicht hätte übertragen werden können.

Das Lesegerät 106 kann dann über seine Anzeige 122 eine Nachricht ausgeben, wonach das Produkt echt ist.

Für eine noch weiter erhöhte Vertrauenswürdigkeit der Echtheitsprüfung kann ferner wie folgt vorgegangen werden: Nach der Autorisierung des Lesegeräts und der Authentifizierung des Transponders 104 sendet das Lesegerät 106 ein weiteres Zugriffskommando an den Transponder 104, um den Referenzwert 114 und dessen Signatur 150 auszulesen. Die entsprechende Kommunikation zwischen dem Lesegerät 106 und dem Transponder 104 kann wiederum mit Hilfe symmetrischer Verschlüsselung geschützt erfolgen.

Das Lesegerät 106 prüft dann die Signatur 150. Nur wenn die Signaturprüfung der Signatur 150 erfolgreich ist, und nachdem sowohl die Autorisierung des Lesegeräts und die Authentifizierung des Transponders 104 erfolgt ist, gibt das Lesegerät 106 bei dieser Ausführungsform eine Nachricht auf der Anzeige 122 aus, wonach das Produkt 100 echt ist.

Alternativ kann die Authentifizierung des Transponders 104 auch gegenüber der Chipkarte 132 erfolgen, beispielsweise mit einem sogenannten Card-to-Card-Verification-Verfahren. Ferner kann auch vorgesehen sein, dass die Authentifizierung gegenseitig ist, das heißt, dass sich auch das Lesegerät 106 bzw. die Chipkarte 132 gegenüber dem Transponder 104 authentifizieren muss, was wiederum mit Hilfe eines Challenge-Response-Verfahrens unter Zuhilfenahme eines asymmetrischen oder symmetrischen Schlüssels erfolgen kann.

Erst nachdem die Prüfung der Echtheit des Produkts erfolgreich abgeschlossen ist, kann das Lesegerät 106 ein weiteres Zugriffskommando an den Transponder 104 richten, um das Haltbarkeitsdatum 152 und/oder die Temperaturwerte 154 aus dem Speicher 144 auszulesen. Diese werden dann durch die Programminstruktionen 120 ausgewertet und/oder über die Anzeige 122 ausgegeben. Auf diese Art und Weise kann geprüft werden, ob das Produkt 100 noch verwendbar ist.

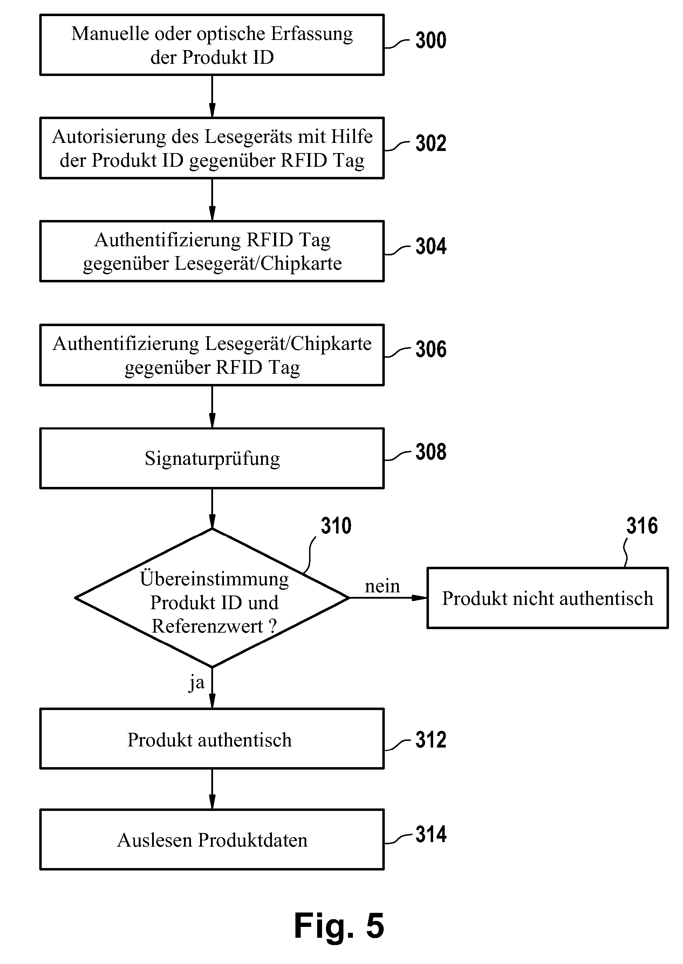

Die Figur 5 zeigt ein entsprechendes Flussdiagramm. In dem Schritt 300 wird der Identifikator entsprechend dem Schritt 200 der Ausführungsform der Figur 3 erfasst und in das Lesegerät eingegeben. In dem Schritt 302 erfolgt die Autorisierung des Lesegeräts mit Hilfe des Identifikators gegenüber dem RFID-Tag. Dies kann unmittelbar unter Verwendung des Identifikators als symmetrischen Schlüssel oder mit Hilfe eines aus dem Identifikator und einem Masterkey generierten symmetrischen Schlüssels, der dem in dem RFID-Tag gespeicherten Referenzwert entspricht, erfolgen.

In dem Schritt 304 authentifiziert sich der RFID-Tag gegenüber dem Lesegerät oder der dem Lesegerät zugeordneten Chipkarte, beispielsweise mit Hilfe eines Challenge-Response-Verfahrens. Optional authentifiziert sich auch das Lesegerät bzw. die Chipkarte gegenüber dem RFID-Tag in dem Schritt 306. Ferner kann eine Signaturprüfung in dem Schritt 308 erfolgen, indem das Lesegerät nach dessen Autorisierung auf dem RFID-Tag zugreift, und von dort die Signatur des Referenzwerts erhält.

In dem Schritt 310 erfolgt eine Überprüfung des Identifikators, das heißt der Produkt ID, auf Übereinstimmung mit dem aus dem RFID-Tag durch das Lesegerät ausgelesenen Referenzwert. Wenn eine Übereinstimmung vorliegt, so wird in dem Schritt 312 ein Signal von dem Lesegerät ausgegeben, wonach das Produkt authentisch ist. Nachfolgend können weitere Produktdaten und produktrelevante Umweltinformationen aus dem RFID-Tag durch das Lesegerät ausgelesen und verarbeitet bzw. angezeigt werden.

Falls die Prüfung in dem Schritt 310 keine Übereinstimmung ergibt, ist das Produkt nicht authentisch, was durch Ausgabe eines entsprechenden Signals durch das Lesegerät signalisiert werden kann (Schritt 316).

### Bezugszeichenliste

- 100: Produkt
- 102: Etikett
- 104: Transponder
- 106: Lesegerät
- 108: Funk-Schnittstelle
- 110: Funk-Schnittstelle
- 112: Logik-Schaltkreis
- 114: Referenzwert
- 116: Schnittstelle
- 118: Prozessor
- 120: Programminstruktionen
- 122: Anzeige
- 124: Signal
- 126: Signal
- 128: kryptographische Komponente
- 130: kryptographische Komponente
- 132: Chipkarte
- 134: Chipkarten-Schnittstelle
- 136: Masterkey
- 138: Netzwerk-Schnittstelle
- 140: Netzwerk
- 142: Verzeichnisserver
- 144: elektronischer Speicher
- 146: öffentlicher Schlüssel
- 148: privater Schlüssel
- 150: Signatur
- 152: Haltbarkeitsdatum
- 154: Temperaturwerte
- 156: Temperatursensor

## Patentansprüche

1. Verfahren zur Prüfung der Echtheit eines Produkts (100) zum Schutz gegen Produktpiraterie mit folgenden Schritten:
- Erfassung eines dem Produkt zugeordneten Identifikators,
- Eingabe des Identifikators in ein Lesegerät (106), wobei das Lesegerät eine Schnittstelle (110) zur Kommunikation über Funk mit einer dem Produkt zugeordneten Sende-Empfangseinheit (104) aufweist, und wobei in der Sende-Empfangseinheit ein Referenzwert (114) bezüglich des Identifikators gespeichert ist,
- Autorisierung des Lesegeräts für einen Zugriff auf die Sende-Empfangseinheit, wobei die Autorisierung mit Hilfe des identifikators über die Schnittstelle (110) gegenüber der Sende-Empfangseinheit erfolgt,
wobei das Produkt bei Übereinstimmung des Identifikators mit dem Referenzwert als echt gilt,
wobei die Erfassung des Identifikators mit Hilfe eines optischen Sensors (116) erfolgt,
wobei das Lesegerät zu dessen Autorisierung gegenüber der Sende-Empfangseinheit den Identifikator an die Sende-Empfangseinheit über die Schnittstelle (110) sendet, die Sende-Empfangseinheit den Identifikator anhand des Referenzwerts überprüft, und wobei bei Übereinstimmung des Identifikators mit dem Referenzwert das Lesegerät als autorisiert gilt, sodass die Sende-Empfangseinheit anschließend die Echtheit des Produkts gegenüber dem Lesegerät signalisiert und wobei die Sende-Empfangseinheit im gegenteiligen Fall kein Signal abgibt.

2. Verfahren nach Anspruch 1, wobei das Lesegerät zu dessen Autorisierung
- gegenüber der Sende-Empfangseinheit den Identifikator an die Sende-Empfangseinheit über die Schnittstelle (110) sendet, die Sende-Empfangseinheit den Identifikator anhand des Referenzwerts überprüft, und wobei bei Übereinstimmung des Identifikators mit dem Referenzwert das Lesegerät als autorisiert gilt, sodass die Sende-Empfangseinheit anschließend die Echtheit des Produkts gegenüber dem Lesegerät signalisiert, und/oder
- ein Zugriffskommando an die Sende-Empfangseinheit über die Schnittstelle (110) sendet, wobei das Zugriffskommando mit Hilfe des Identifikators verschlüsselt ist, und wobei die Autorisierung dann erfolgt ist, wenn das verschlüsselte Zugriffskommando von der Sende-Empfangseinheit mit Hilfe des Referenzwerts entschlüsselbar ist,
wobei nach der Autorisierung des Lesegeräts die Sende-Empfangseinheit den Referenzwert (114) an das Lesegerät überträgt, wo der Identifikator mit Hilfe des Referenzwerts überprüft wird.

3. Verfahren nach Anspruch 1 oder 2, wobei nach Feststellung der Echtheit des Produkts produktbezogene Daten (152, 154) aus einem Speicher (144) der Sende-Empfangseinheit durch das Lesegerät ausgelesen werden,
wobei die produktbezogenen Daten produktrelevante Umweltdaten (154) be-inhalten, wobei die produktrelevanten Umweltdaten Temperaturdaten bein-halten, die mit Hilfe eines Sensors (156) erfasst und in dem Speicher der Sende-Empfangseinheit gespeichert worden sind.

4. Verfahren nach einem der vorhergehenden Ansprüche, wobei es sich bei dem Produkt um eine Verpackung, ein Verbrauchsgut oder ein Investitions-gut handelt, insbesondere um ein Kleidungsstück, ein Nahrungsmittel, ein elektronisches Gerät, ein Maschinenteil, ein Ersatzteil, ein Fahrzeug oder Fahrzeugteil, ein Medikament oder eine Getränkeflasche.

5. System zur Prüfung der Echtheit eines Produkts (100) zum Schutz gegen Produktpiraterie mit
- einem dem Produkt zugeordneten oder durch Personalisierung zuord-nungsbaren Identifizierungsmerkmal (102) von dem ein Identifikator erfassbar ist,
- einer Sende-Empfangseinheit (104), die zur Kommunikation über Funk mit einem Lesegerät (106) ausgebildet ist, wobei in der Sende-Empfangseinheit ein Referenzwert (114) bezüglich des Identifikators gespeichert ist oder speicherbar ist, und wobei die Sende-Empfangseinheit Mittel (112, 130) zur Autorisierung des Lesegeräts für einen Zugriff auf die Sende-Empfangseinheit aufweist, sodass die Prüfung der Echtheit des Produkts anhand des Identifikators und des Referenzwerts nur nach der Autorisierung erfolgen kann,
wobei die Sende-Empfangseinheit zum Empfang des Identifikators von dem Lesegerät ausgebildet ist, wobei das Lesegerät als autorisiert gilt, wenn der Identifikator mit dem Referenzwert übereinstimmt, sodass die Sende-Empfangseinheit daraufhin die Echtheit des Produkts gegenüber dem Lesegerät signalisiert, wobei die Sende-Empfangseinheit im gegenteiligen Fall kein Signal abgibt und mit einem optischen Sensor zur Erfassung des Identifikators.

6. System nach Anspruch 5, wobei die Sende-Empfangseinheit zum Empfang eines mit Hilfe des Identifikators verschlüsselten Zugriffskommandos von dem Lesegerät ausgebildet ist, wobei das Lesegerät als autorisiert gilt, wenn die Sende-Empfangseinheit das Zugriffskommando mit Hilfe des Referenzwerts entschlüsseln kann.

7. System nach Anspruch 6, wobei die Sende-Empfangseinheit so ausgebildet ist, dass nach der Autorisierung des Lesegeräts der Referenzwert an das Lesegerät übertragen wird, wo der Identifikator mit Hilfe des Referenzwerts überprüft wird, sodass das Lesegerät bei Übereinstimmung des Identifikators mit dem Referenzwert die Echtheit des Produkts signalisiert.

8. System nach einem der Ansprüche 5 bis 7, wobei die Sende-Empfangseinheit zur Authentifizierung mit Hilfe eines kryptographischen Verfahrens gegenüber dem Lesegerät oder einer dem Lesegerät zugeordneten Chipkarte (132) ausgebildet ist.

9. System nach einem der Ansprüche 5 bis 8, wobei die Sende-Empfangseinheit zur Übertragung einer Signatur (150) des Referenzwerts an das Lesegerät ausgebildet ist.

10. System nach einem der Ansprüche 5 bis 9, wobei die Sende-Empfangseinheit einen Speicher (144) zur Speicherung von produktbezogenen Daten (152, 154) aufweist, und wobei die Sende-Empfangseinheit zur Übertragung der produktbezogenen Daten an das Lesegerät nach dessen Autorisierung ausgebildet ist.

11. System nach einem der Ansprüche 5 bis 11, wobei es sich bei der Sende-Empfangseinheit um einen Transponder, insbesondere einen RFID-Transponder handelt.

## Claims

1. A method for checking the authenticity of a product (100) for protection against product piracy, said method having the following steps:
- detecting an identifier associated with the product,
- inputting the identifier into a reader (106), wherein the reader has an interface (110) for communication via radio with a transceiver unit (104) associated with the product, and wherein a reference value (114) in respect of the identifier is stored in the transceiver unit,
- authorising the reader for access to the transceiver unit, wherein the authorisation to the transceiver unit is performed with the aid of the identifier via the interface (110),
wherein the product is considered to be genuine if the identifier matches the reference value,
wherein the identifier is detected with the aid of an optical sensor (116),
wherein the reader for authorisation thereof to the transceiver unit sends the identifier to the transceiver unit via the interface (110), the transceiver unit checks the identifier on the basis of the reference value, and wherein, if the identifier matches the reference value, the reader is considered to be authorised, such that the transceiver unit then signals the authenticity of the product to the reader, and wherein the transceiver unit does not deliver a signal in the opposite case.

2. The method according to Claim 1, wherein the reader, for authorisation thereof,
- to the transceiver unit sends the identifier to the transceiver unit via the interface (110), the transceiver unit checks the identifier on the basis of the reference value, and wherein, if the identifier matches the reference value, the reader is considered to be authorised, such that the transceiver unit then signals the authenticity of the product to the reader, and/or
- sends an access command to the transceiver unit via the interface (110), wherein the access command is encrypted with the aid of the identifier, and wherein the authorisation is then performed when the encrypted access command can be decrypted by the transceiver unit with the aid of the reference value,
wherein, following the authorisation of the reader, the transceiver unit transfers the reference value (114) to the reader, where the identifier is checked with the aid of the reference value.

3. The method according to Claim 1 or 2, wherein, once the authenticity of the product has been determined, product-related data (152, 154) are read out from a memory (144) of the transceiver unit by the reader, wherein the product-related data include product-relevant environmental data (154), wherein the product-relevant environmental data include temperature data detected with the aid of a sensor (156) and stored in the memory of the transceiver unit.

4. The method according to one of the preceding claims, wherein the product is a package, a consumer product or a capital good, in particular an item of clothing, a foodstuff, an electronic device, a machine part, a replacement part, a vehicle or vehicle part, a drug or a beverage bottle.

5. A system for checking the authenticity of a product (100) for protection against product piracy, said system having
- an identification feature (102) which is associated with the product or can be associated by personalisation and by which an identifier can be detected,
- a transceiver unit (104), which is configured for communication via radio with a reader (106), wherein a reference value (114) in respect of the identifier is stored or can be stored in the transceiver unit, and wherein the transceiver unit has means (112, 130) for authorising the reader for access to the transceiver unit, such that the authenticity of the product can be checked on the basis of the identifier and the reference value only after the authorisation,
wherein the transceiver unit is configured to receive the identifier from the reader, wherein the reader is considered to be authorised when the identifier matches the reference value, such that the transceiver unit then signals the authenticity of the product to the reader, wherein the transceiver unit does not deliver a signal in the opposite case, said system also having an optical sensor for detecting the identifier.

6. The system according to Claim 5, wherein the transceiver unit is configured to receive from the reader an access command encrypted with the aid of the identifier, wherein the reader is considered to be authorised when the transceiver unit can decrypt the access command with the aid of the reference value.

7. The system according to Claim 6, wherein the transceiver unit is configured such that, after the authorisation of the reader, the reference value is transferred to the reader, where the identifier is checked with the aid of the reference value, such that the reader signals the authenticity of the product when the identifier matches the reference value.

8. The system according to one of Claims 5 to 7, wherein the transceiver unit is configured for authentication, with the aid of a cryptographic method, to the reader or a chip card (132) associated with the reader.

9. The system according to one of Claims 5 to 8, wherein the transceiver unit is configured for the transmission of a signature (150) of the reference value to the reader.

10. The system according to one of Claims 5 to 9, wherein the transceiver unit has a memory (144) for storing product-related data (152, 154), and wherein the transceiver unit is configured for the transmission of the product-related data to the reader after this authorisation.

11. The system according to one of Claims 5 to 11, wherein the transceiver unit is a transponder, in particular an RFID transponder.

## Revendications

1. Procédé de contrôle de l'authenticité d'un produit (100) pour la protection contre le piratage de produits, avec les étapes suivantes :
- saisie d'un identifiant associé au produit,
- entrée de l'identifiant dans un appareil de lecture (106), dans lequel l'appareil de lecture présente une interface (110) pour la communication par radio avec une unité émetteur-récepteur (104) associée au produit, et dans lequel une valeur de référence (114) concernant l'identifiant est enregistrée dans l'unité émetteur-récepteur.
- autorisation de l'appareil de lecture pour un accès à l'unité émetteur-récepteur, dans lequel l'autorisation par rapport à l'unité émetteur-récepteur est effectuée à l'aide de l'identifiant par l'intermédiaire de l'interface (110),
dans lequel le produit est réputé être authentique pour une concordance de l'identifiant avec la valeur de référence,
dans lequel la saisie de l'identifiant est effectuée à l'aide d'un capteur optique (116),
dans lequel l'appareil de lecture dont l'autorisation par rapport à l'unité émetteur-récepteur envoie l'identifiant vers l'unité émetteur-récepteur par l'intermédiaire de l'interface (110), l'unité émetteur-récepteur contrôle l'identifiant à l'aide de la valeur de référence, et dans lequel, pour une concordance de l'identifiant avec la valeur de référence, l'appareil de lecture le considère autorisé de sorte que l'unité émetteur-récepteur signale ensuite l'authenticité du produit par rapport à l'appareil de lecture et dans lequel l'unité émetteur-récepteur n'émet pas de signal dans le cas contraire.

2. Procédé selon la revendication 1, dans lequel l'appareil de lecture, pour son autorisation,
- envoie l'identifiant par rapport à l'unité émetteur-récepteur à l'unité émetteur-récepteur par l'intermédiaire de l'interface (110), l'unité émetteur-récepteur contrôle l'identifiant à l'aide de la valeur de référence, et dans lequel, pour la concordance de l'identifiant avec la valeur de référence, l'appareil de lecture est réputé autorisé, de sorte que l'unité émetteur-récepteur signale ensuite l'authenticité du produit par rapport à l'appareil de lecture, et/ou
- envoie un ordre d'accès à l'unité émetteur-récepteur par l'intermédiaire de l'interface (110), dans lequel l'ordre d'accès est encodé à l'aide de l'identifiant, et dans lequel l'autorisation a lieu lorsque l'ordre d'accès encodé peut être décodé par l'unité émetteur-récepteur à l'aide de la valeur de référence,
dans lequel, après l'autorisation de l'appareil de lecture, l'unité émetteur-récepteur transmet la valeur de référence (114) à l'appareil de lecture où l'identifiant est contrôlé à l'aide de la valeur de référence.

3. Procédé selon les revendications 1 ou 2, dans lequel, après le constat de l'authenticité du produit, des données relatives au produit (152, 154) sont lues par l'appareil de lecture à partir de la mémoire (144) de l'unité émetteur-récepteur,
dans lequel les données relatives au produit contiennent des données environnementales relatives au produit (154), dans lequel les données environnementales relatives au produit contiennent des données de température qui ont été saisies à l'aide d'un capteur (156) et ont été stockées dans la mémoire de l'unité émetteur-récepteur.

4. Procédé selon l'une des revendications précédentes, dans lequel, dans le cas du produit, il s'agit d'un emballage, d'un bien de consommation ou d'un bien d'investissement, notamment d'un vêtement, d'un produit alimentaire, d'un appareil électronique, d'une pièce de machine, d'une pièce de rechange, d'un véhicule ou d'une pièce de véhicule, d'un médicament ou d'une bouteille de boisson.

5. Système de contrôle de l'authenticité d'un produit (100) pour la protection contre le piratage de produits avec
- une caractéristique d'identification (102), associée ou pouvant être associée par une personnalisation au produit, de laquelle un identifiant peut être saisi,
- une unité émetteur-récepteur (104) qui est conçue pour la communication par radio avec un appareil de lecture (106), où une valeur de référence (114) concernant l'identifiant est stockée, ou peut être stockée, dans l'unité émetteur-récepteur, et dans lequel l'unité émetteur-récepteur présente des moyens (112, 130) pour l'autorisation de l'appareil de lecture pour un accès à l'unité émetteur-récepteur, de sorte que le contrôle de l'authenticité du produit ne peut avoir lieu à l'aide de l'identifiant et de la valeur de référence qu'après l'autorisation,
dans lequel l'unité émetteur-récepteur est conçue pour la réception de l'identifiant par l'appareil de lecture, dans lequel l'appareil de lecture est réputé être autorisé lorsque l'identifiant concorde avec la valeur de référence, de sorte qu'en conséquence l'unité émetteur-récepteur signale l'authenticité du produit par rapport à l'appareil de lecture, dans lequel l'unité émetteur-récepteur, dans le cas contraire, n'émet aucun signal, et avec un capteur optique pour la saisie de l'identifiant.

6. Système selon la revendication 5, dans lequel l'unité émetteur-récepteur est conçue pour la réception d'un ordre d'accès de l'appareil de lecture encodé à l'aide de l'identifiant, dans lequel l'appareil de lecture est réputé être autorisé si l'unité émetteur-récepteur peut décoder l'ordre d'accès à l'aide de la valeur de référence.

7. Système selon la revendication 6, dans lequel l'unité émetteur-récepteur est ainsi conçue qu'après l'autorisation de l'appareil de lecture, la valeur de référence est transmise à l'appareil de lecture où l'identifiant est contrôlé à l'aide de la valeur de référence, de sorte que l'appareil de lecture signale l'authenticité du produit pour une concordance de l'identifiant avec la valeur de référence.

8. Système selon l'une des revendications 5 à 7, dans lequel l'unité émetteur-récepteur est conçue pour l'authentification à l'aide d'un procédé cryptographique par rapport à l'appareil de lecture ou d'une carte à puce (132) associée à l'appareil de lecture.

9. Système selon l'une des revendications 5 à 8, dans lequel l'unité émetteur-récepteur est conçue pour la transmission d'une signature (150) de la valeur de référence à l'appareil de lecture.

10. Système selon l'une des revendications 5 à 9, dans lequel l'unité émetteur-récepteur présente une mémoire (144) pour le stockage de données relatives au produit (152, 154), et dans lequel l'unité émetteur-récepteur est conçue pour la transmission des données relatives au produit à l'appareil de lecture après son autorisation.

11. Système selon l'une des revendications 5 à 11, dans lequel il s'agit d'un transpondeur, notamment un transpondeur RFID, dans le cas de l'unité émetteur-récepteur.
